# EUROPEAN PATENT APPLICATION

(11) **EP 1 213 865 A1**
(43) Date of publication of application: **12.06.2002**
(21) Application number: 00949946.8
(22) Date of filing: 31.07.2000
(51) Int. Cl.: H04J 14/02, H04B 10/18, H01S 3/06

(54) **WAVELENGTH DIVISION MULTIPLEX OPTICAL TRANSMITTER**

(71) Applicant: MITSUBISHI DENKI KABUSHIKI KAISHA, Tokyo 100-8310 (JP); KDD Submarine Cable Systems Inc., Tokyo 163-1033 (JP)
(72) Inventor: MUNEHIRA, Hiroaki Mitsubishi Denki K.K., Chiyoda-ku, Tokyo 100-8310 (JP); MIZUOCHI, Takashi Mitsubishi Denki K.K., Chiyoda-ku, Tokyo 100-8310 (JP); TAKEMURA, Nobuyuki Mitsubishi Denki K.K., Chiyoda-ku, Tokyo 100-8310 (JP); SHIMIZU, Katsuhiro Mitsubishi Denki K.K., Chiyoda-ku, Tokyo 100-8310 (JP); SHIBANO, Eiichi KDD Submarine Cable Systems Inc., Shinjuku-ku, Tokyo 163-1033 (JP); YASUDA, Tadami KDD Submarine Cable Systems Inc., Shinjuku-ku, Tokyo 163-1033 (JP); OKAYASU, Atsuko KDD Submarine Cable Systems Inc., Shinjuku-ku, Tokyo 163-1033 (JP)
(74) Representative: Sajda, Wolf E., Dipl.-Phys.
(86) International application number: JP0005153
(87) International publication number: WO0211338

(57) **Abstract**

A plurality of amplified spontaneous emission light signals are output by using a plurality of optical amplifiers 12a and 12b which has a signal input terminal terminated at no reflection, the amplified spontaneous emission light signals are band-filtered in a plurality of optical band pass filters 13a and 13b respectively to obtain a plurality of spectrum slice optical signals, and the spectrum slice optical signals functioning as a plurality of dummy optical signals are multiplexed with a plurality of modulated optical signals.

## Description

### TECHNICAL FIELD

The present invention relates to a wavelength division multiplexing and optical transmission apparatus in which transmission quality is heightened in a stage of a small number of initial setting wavelengths by installing a non-input optical amplifier to produce a dummy of an optical signal additionally set in the future.

### BACKGROUND ART

A submarine optical cable transmission method is classified into a non-relay method applied for a strait crossing and a long distance relay method including a submarine relay device with which an ocean crossing is intended. A submarine optical cable relay transmission system requiring of the long distance relay method is composed of a submarine relay transmission line and coast station devices of land placed on both ends of the submarine relay transmission line, and a plurality of submarine relay devices are normally installed at relay span intervals of almost 50 Km in the submarine optical cable relay transmission system. As a technique of efficiently transmitting a plurality of pieces of information through an optical cable, a wavelength division multiplexing and optical transmission technique is known. In this wavelength division multiplexing and optical transmission technique, a plurality of signals are allocated to a plurality of optical signals having wavelengths different from each other in one-to-one correspondence (division), the optical signals are multiplexed to a multiplexed optical signal, and the multiplexed optical signal is transmitted in two-way communication by using two optical fibers. On a transmission side, a plurality of optical signals sent from sources of optical signals of wavelengths different from each other are multiplexed to a multiplexed optical signal in an optical multiplexer. In a reception side, the multiplexed optical signal is demultiplexed to the optical signals having the wavelengths different from each other in an optical demultiplexer, and the optical signals are transformed into a plurality of electric signals in an optical receiving element. In this technique, a merit of making possible to transmit a large amount of information attracts attention.

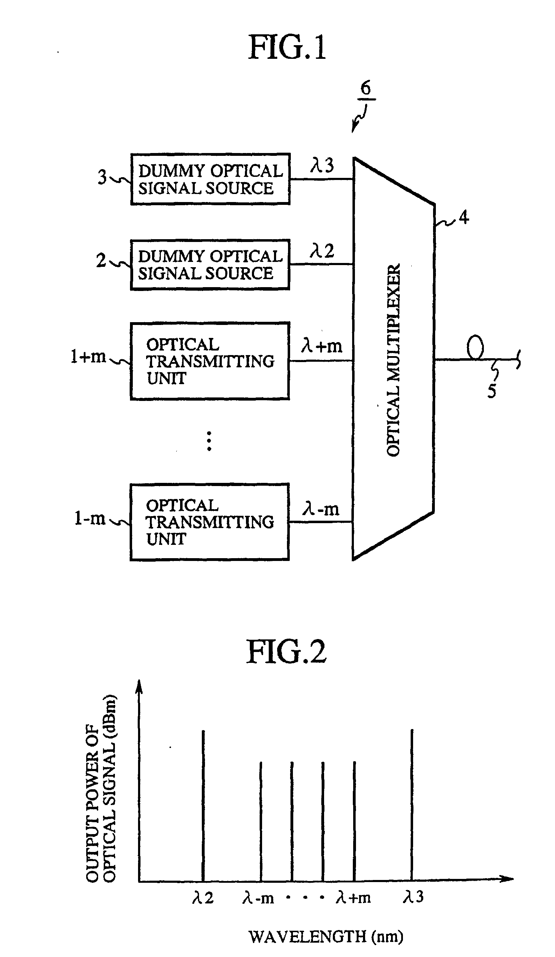

Fig. 1 is a block diagram showing the configuration of a conventional wavelength division multiplexing and optical transmission apparatus. In Fig. 1, 1-m to 1+m indicate a plurality of optical transmitting units for modulating a plurality of laser signals having wavelengths λ-m to λ+m different from each other with a plurality of data signals respectively and outputting a plurality of modulated optical signals. 2 and 3 indicate dummy optical signal sources. 4 indicates an optical multiplexer. 5 indicates an optical fiber. 6 indicates a conventional wavelength division multiplexing and optical transmission apparatus. In this example, the conventional wavelength division multiplexing and optical transmission apparatus 6 is installed in a coast station device.

Next, an operation will be described.

A plurality of laser signals having wavelengths λ-m to λ+m different from each other are modulated with a plurality of data signals in the optical transmitting units 1-m to 1+m, of which the number is 2m, in one-to-one correspondence, and a plurality of modulated optical signals are output. In cases where the demandof the number of wavelengths in a telecommunication line is 2m (m is normally equal to a value ranging from 4 to 8) in the early stage in which the conventional wavelength division multiplexing and optical transmission apparatus 6 is installed, the optical transmitting units 1-m to 1+m are installed. Also, as the demand of the number of wavelengths is increased, a plurality of optical transmitting units are additionally installed until the total number of optical transmitting units reaches a maximum setting wavelength number 2n (n is normally equal to a value ranging from 32 to 64). A transmission band width is determined according to a plurality of optical amplifier repeaters connected with each other in multistage and characteristics of an optical fiber. In case of a combination of a plurality of C-band optical amplifier repeaters using a plurality of erbium doped optical fiber amplifiers (EDFA) and a non-zero distributed shift optical fiber, a transmission band width is almost equal to 30 nm. A plurality of divided wavelength bands are obtained by dividing a transmission wavelength band at equal intervals, and each of the optical signals output from the optical transmitting units 1-n to 1+n has a spectral line width in a wavelength band placed within one divided wavelength band. A dummy optical signal of a prescribed wavelength λ2 and a dummy optical signal of a prescribed wavelength λ3 are output from the dummy optical signal sources 2 and 3 without modulation. The wavelengths λ2 and λ3 are placed on the outside of a wavelength band which is occupied by the optical signals output from the optical transmitting units 1-m to 1+m and correspond to wavelengths of optical signals output from the optical transmitting units 1-n to 1+n additionally installed in the future. As a view of a plurality of spectral lines is shown in Fig. 2, the dummy optical signal of the wavelength λ2 is adjacent to a modulated optical signal of the wavelength λ-m on a shorter wavelength side, and the dummy optical signal of the wavelength λ3 is adjacent to a modulated optical signal of the wavelength λ+m on a longer wavelength side. These dummy optical signals output from the dummy optical signal sources 2 and 3 are multiplexed in the optical multiplexer 4 with the modulated optical signals output from the optical transmitting units 1-m to 1+m and are transmitted to a submarine relay device or the other coast station device through the optical fiber 5. In this case, the dummy optical signals placed on both sides of a wavelength band of the modulated optical signals function so as to reduce a peak power of each modulated optical signal. In detail, in an optical amplification relay transmission system, a power of each modulated optical signal is almost determined to a value which is obtained by dividing a saturation power of each optical amplifier repeater installed in a proper position of an optical signal transmission line by the number of wavelengths. Assuming that the number of wavelengths is small, a power of each modulated optical signal is excessively heightened so as to cause non-linear optical effects in the transmission line of optical fiber 5. Therefore, a problem has arisen that the transmission quality of the modulated optical signals considerably deteriorates. As non-linear optical effects causing the deterioration of the transmission quality, a four wavelength mixing (FWM) and a self phase modulation (SPM) are well known. The FWM and the SPM are disclosed in detail in "Nonlinear Fiber Optics, Academic Press, 1995, New York" written by G. P. Agrawal. In case of the conventional wavelength division multiplexing and optical transmission apparatus 6 in which the dummy optical signals are placed in adjacent to the wavelength band occupied by the modulated optical signals, the optical amplifier repeater is operated so as to set a sum of powers of the modulated optical signals and the dummy optical signals to a constant value. Therefore, a sum of the powers of the modulated optical signals output from the optical amplifier repeater is suppressed, the adverse influence of the non-linear optical effects in the optical fiber 5 is considerably reduced, and the transmission quality can be maintained.

Also, the dummy optical signals placed on both sides of the wavelength band of the modulated optical signals function so as to apparently widen the wavelength band occupied by the modulated optical signals. In detail, in a submarine optical cable relay transmission system, the optical amplification is repeatedly performed at needs in a plurality of optical amplifier repeaters (not shown) placed on proper positions of the optical transmission line. Each optical amplifier repeater is designed so as to optimize a gain profile of the modulated optical signals in cases where the number of wavelengths of themodulated optical signals input to the optical amplifier repeater is maximized. Therefore, in cases where the number of wavelengths used in the early operation is small, when the optical amplifier repeater is operated for the small number of wavelengths, a gain profile corresponding to the small number of wavelengths differs from that assumed in the designingof the optical amplifier repeater. Therefore, when the optical amplification is repeatedly performed in the optical amplifier repeaters, a gain difference is remarkably increased in the modulated optical signals according to the gain profile set in the designing of each optical amplifier repeater. In a case of the conventional wavelength division multiplexing and optical transmission apparatus 6 in which the dummy optical signals are placed in adjacent to the wavelength band occupied by the modulated optical signals, the optical amplifier repeaters are operated so as to control the sum of the output powers of the modulated optical signals and the dummy optical signals to a constant value. Therefore, the same gain profile as that set in the designing of each optical amplifier repeater is obtained in the optical amplifier repeater, the adverse influence of the gain difference on the modulated optical signals is considerably reduced, and the transmission quality of the modulated optical signals can be maintained.

However, in the conventional wavelength division multiplexing and optical transmission apparatus 6, because each of the dummy optical signal sources 2 and 3 is formed of a laser diode from which a laser signal of a single wavelength is emitted, a spectral line width of the output laser signal is narrow. Therefore, a stimulated Brillouin scattering (SBS) denoting the non-linear optical effects is caused, and a problem has arisen that the transmission quality of the modulated optical signals deteriorate. Also, because each output laser signal is polarized in an inherent direction, there is a case where the lowering of a gain of each modulated optical signal polarized in a specific direction or a change-with-time of a degree of the lowering of the gain is caused due to the polarization dependent gain (PDG) of the optical amplifier repeater. In this case, it is necessary to use a polarization scrambler (PSCR) so as to prevent the deterioration of an S/N ratio of the modulated optical signal by performing non-polarization for the polarized optical signal. Therefore, a problem has arisen that a size of the wavelength division multiplexing and optical transmission apparatus is enlarged and it is difficult to reduce the cost of the production of the wavelength division multiplexing and optical transmission apparatus. Also, in cases where a technical improvement is planned to widen the wavelength band occupied by the modulated optical signals for the purpose of increasing the number 2m of wavelengths of the modulated optical signals, because each of the dummy optical signal sources 2 and 3 is formed of a laser diode from which a laser signal of a single wavelength is emitted, the dummy optical signal sources 2 and 3 cannot be accommodated to a system change. Therefore, it is required to newly prepare a dummy optical signal source possible to be accommodated to a new system, and a problem has arisen that it becomes more and more difficult to reduce the cost of the production of the wavelength division multiplexing and optical transmission apparatus.

The present invention is provided to solve the above-described problems, and the object of the present invention is to provide a wavelength division multiplexing and optical transmission apparatus in which a plurality of modulated optical signals can be transmitted without degrading transmission quality of the modulated optical signals by using a non-input optical amplifier even though the number of wavelengths of the modulated optical signals used at the early time is small, a gain difference caused in an optical transmissionwavelength band is compensated and the transmission quality is heightened.

### DISCLOSURE OF THE INVENTION

A wavelength division multiplexing and optical transmission apparatus according to the present invention comprises a plurality of optical transmitting units for modulating a plurality of laser signals having inherent wavelengths with a plurality of data signals and outputting a plurality of modulated optical signals, optical amplifying means for outputting an amplified spontaneous emission light signal (ASE), band pass filtering means for setting an occupied wavelength band of the modulated optical signals output by the optical transmitting units, an additional wavelength band possible to be additionally installed in the future and a neighboring wavelength band of both the occupied wavelength band and the additional wavelength band as a filtering wavelength band and band-filtering the amplified spontaneous emission light signal output by the optical amplifying means and outputting a non-modulated spectrum slice optical signal, and optical multiplexing means for multiplexing the non-modulated spectrum slice optical signal output by the band pass filtering means with the modulated optical signals output by the optical transmitting units and transmitting a multiplexed optical signal.

In the above configuration, the amplified spontaneous emission light signal is band-filtered to obtain the spectrum slice optical signal, and the spectrum slice optical signal functioning as a dummy optical signal is multiplexed with the modulated optical signals. Therefore, a wavelength band occupied by the spectrum slice optical signal or band components of the spectrum slice optical signal can be arbitrarily processed. Also, because a spectrum line width of the spectrum slice optical signal can be widened, there is no probability that a transmission quality of the modulated optical signals is degraded due to the stimulated Brillouin scattering (SBS). Also, because the polarization in an inherent direction doe not exist in the modulated optical signals, there is no probability that the reduction of gains of the modulated optical signals or a change-with-time of a degree of the reduction of the gains of the modulated optical signals is caused due to the polarization dependent gain (PDG) of each optical amplifier repeater. Accordingly, the deterioration of an S/N ratio can be prevented. Also, it is not required to prepare a polarization scrambler (PSCR) for the purpose of obtaining the modulated optical signals of no polarization, and it is not required to prepare a new dummy optical signal source in the widening of the optical transmission wavelength band for the purpose of increasing the number of wavelengths of the modulated optical signals. Accordingly, the enlarging of the size of the wavelength division multiplexing and optical transmission apparatus can be suppressed, and the cost of the production of the wavelength division multiplexing and optical transmission apparatus can be reduced.

In the wavelength division multiplexing and optical transmission apparatus according to the present invention, the optical amplifying means comprises a pair of optical amplifiers which each have a signal input terminal terminated at no reflection, and the band pass filtering means comprises a pair of optical band pass filters for setting both the occupied wavelength band of the modulated optical signals output by the optical transmitting units and the neighboring wavelength band of the occupied wavelength band as the filtering wavelength band, filtering the amplified spontaneous emission light signal output by the optical amplifiers and outputting a pair of non-modulated spectrum slice optical signals.

In the above configuration, a plurality of spontaneous emitted laser signals are output by using the optical amplifiers which each have a signal input terminal terminated at no reflection, the spontaneous emitted laser signals are band-filtered in the optical bandpass filters respectively to obtain spectrum slice optical signals, and the spectrum slice optical signals functioning as dummy optical signals are multiplexedwith the modulated optical signals. Therefore, awavelength band occupied by the spectrum slice optical signals or band components of the spectrum slice optical signals can be arbitrarily processed. Also, because a spectrum line width of each spectrum slice optical signal can be widened, there is no probability that a transmission quality of the modulated optical signals is degraded due to the stimulated Brillouin scattering (SBS). Also, because the polarization in an inherent direction do not exist in the modulated optical signals, there is no probability that the reduction of gains of the modulated optical signals or a change-with-time of a degree of the reduction of the gains of the modulated optical signals is caused due to the polarization dependent gain (PDG) of each optical amplifier repeater. Accordingly, the deterioration of an S/N ratio can be prevented. Also, it is not required to prepare a polarization scrambler (PSCR) for the purpose of obtaining the modulated optical signals of no polarization, and it is not required to prepare a new dummy optical signal source in the widening of the optical transmission wavelength band of the optical amplifier repeater for the purpose of increasing the number of wavelengths of the modulated optical signals. Accordingly, the enlarging of the size of the wavelength division multiplexing and optical transmission apparatus can be suppressed, and the cost of the production of the wavelength division multiplexing and optical transmission apparatus can be reduced. Also, in cases where a technical improvement is performed to widen the occupied wavelength band of the modulated optical signals for the purpose of increasing the number of wavelengths of the modulated optical signals, the technical improvement can be performed by only changing the optical band pass filters connected to the optical amplifiers to those having required band pass filtering characteristics. Therefore, it is not required to newly prepare a dummy optical signal source possible to be accommodated to a new system, and the new system of the wavelength division multiplexing and optical transmission apparatus can be obtained without increasing the cost.

In the wavelength division multiplexing and optical transmission apparatus according to the present invention, the optical amplifying means comprises a single optical amplifier which has a signal input terminal terminated at no reflection, and the band pass filtering means comprises a light dividing element for dividing the amplified spontaneous emission light signal output by the optical amplifier into a plurality of amplified spontaneous emission light signals, and a plurality of optical band pass filters, connected to a plurality of divided output terminals of the light dividing element respectively, for outputting the non-modulated spectrum slice optical signal.

In the above configuration, an amplified spontaneous emission light signal is output by using the single optical amplifier which has a signal input terminal terminated at no reflection, the amplified spontaneous emission light signal is divided into a plurality of amplified spontaneous emission light signals, the amplified spontaneous emission light signals are band-filtered in the optical band pass filters respectively to obtain a plurality of spectrum slice optical signals, and the spectrum slice optical signals functioning as a plurality of dummy optical signals are multiplexed with the modulated optical signals. Therefore, a wavelength band occupied by the spectrum slice optical signals or band components of the spectrum slice optical signals can be arbitrarily processed by using the band pass filtering means of a minimum size which is obtained by combining the single optical amplifier and the plurality of optical band pass filters. Also, because a spectrum line width of each spectrum slice optical signal can be widened, there is no probability that a transmission quality of the modulated optical signals is degraded due to the stimulated Brillouin scattering (SBS). Also, because the polarization in an inherent direction do not exist in the modulated optical signals, there is no probability that the reduction of gains of the modulated optical signals or a change-with-time of a degree of the reduction of the gains of the modulated optical signals is caused due to the polarization dependent gain (PDG) of each optical amplifier repeater. Accordingly, the deterioration of an S/N ratio can be prevented. Also, it is not required to prepare a polarization scrambler (PSCR) for the purpose of obtaining the modulated optical signals of no polarization, and it is not required to prepare a new dummy optical signal source in the widening of the optical transmission wavelength band of the optical amplifier repeater for the purpose of increasing the number of wavelengths of the modulated optical signals. Accordingly, the enlarging of the size of the wavelength division multiplexing and optical transmission apparatus can be suppressed, and the cost of the production of the wavelength division multiplexing and optical transmission apparatus can be reduced. Also, in cases where a technical improvement is performed to widen the occupied wavelength band of the modulated optical signals for the purpose of increasing the number of wavelengths of the modulated optical signals, the technical improvement can be performed by only changing the optical band pass filters connected to the optical amplifiers to those having required band pass filtering characteristics. Therefore, it is not required to newly prepare a dummy optical signal source possible to be accommodated to a new system, and the new system of the wavelength division multiplexing and optical transmission apparatus can be obtained without increasing the cost.

In the wavelength division multiplexing and optical transmission apparatus according to the present invention, the optical amplifying means comprises a single optical amplifier which has a signal input terminal terminated at no reflection, and the band pass filtering means comprises a light dividing element for dividing the amplified spontaneous emission light signal output by the optical amplifier into a plurality of amplified spontaneous emission light signals, aplurality of optical band pass filters connected to a plurality of divided output terminals of the light dividing element respectively, an optical multiplexer for multiplexing two or more outputs of the optical band pass filters with each other and outputting the non-modulated spectrum slice optical signal, and an optical amplifier for amplifying an output of the optical multiplexer while controlling a power of the output to a constant value.

In the above configuration, an amplified spontaneous emission light signal is output by using the single optical amplifier which has a signal input terminal terminated at no reflection, the amplified spontaneous emission light signal is divided into a plurality of amplified spontaneous emission light signals, the amplified spontaneous emission light signals are band-filtered in the optical band pass filters respectively to obtain a plurality of spectrum slice optical signals, the spectrum slice optical signals are amplified for each block, and the spectrum slice optical signals functioning as a plurality of dummy optical signals are multiplexed with the modulated optical signals. Therefore, a wavelength band occupied by the spectrum slice optical signals or band components of the spectrum slice optical signals can be arbitrarily processed by using the band pass filtering means which is obtained by combining the single optical amplifier and the plurality of optical band pass filters. Also, even though one of the optical band pass filters is put in an inoperative condition, in the optical amplifier in which an amplified spontaneous emission light signal of a specific wavelength planned to be output from the optical band pass filter put in the inoperative condition is amplified with other amplified spontaneous emission light signals, the other amplified spontaneous emission light signals are amplified at stronger gains, and the emphasized gains of the other amplified spontaneous emission light signals adjacent to the amplified spontaneous emission light signal of the specific wavelength compensate for the lacked amplified spontaneous emission light signal of the specific wavelength. Therefore, the transmission quality is not adversely influenced by the lack of the amplified spontaneous emission light signal of the specific wavelength, and the configuration of the wavelength division multiplexing and optical transmission apparatus having a high redundancy can be obtained.

In the wavelength division multiplexing and optical transmission apparatus according to the present invention, the optical amplifying means comprises an optical amplifier which has a signal input terminal terminated at no reflection, and a plurality of pumping laser signal sources connected to the optical amplifier redundantly.

In the above configuration, the optical amplifying means comprises an optical amplifier which has a signal input terminal terminated at no reflection, and the pumping laser signal sources connected to the optical amplifier redundantly. Therefore, even though one pumping laser signal source is put in an inoperative condition, an output of the other supplement pumping laser signal source is supplied to the optical amplifier. Accordingly, the optical amplification can be stably continued in the optical amplifier, the reliability for the optical amplifier can be heightened.

In the wavelength division multiplexing and optical transmission apparatus according to the present invention, the band pass filtering means comprises a plurality of optical band pass filters connected in cascade.

In the above configuration, the band pass filtering means comprises the optical band pass filters connected in cascade. Therefore, an attenuation form of the spectrum slice optical signal in a given wavelength band can be strictly specified, an S/N ratio of signals can be heightened, and the transmission quality can be heightened.

### BRIEF DESCRIPTION OF THE DRAWINGS

Fig. 1 is a block diagram showing the configuration of an example of a conventional wavelength division multiplexing and optical transmission apparatus.
Fig. 2 is a view showing a spectral distribution of modulated optical signals and dummy optical signals transmitted in the wavelength division multiplexing.
Fig. 3 is a block diagram showing the configuration of a wavelength division multiplexing and optical transmission apparatus according to a first embodiment of the present invention.
Fig. 4 is a view showing output characteristics of an optical amplifier shown in Fig. 3.
Fig. 5 is a view showing filtering characteristics of an optical band pass filter shown in Fig. 3.
Fig. 6 is a block diagram showing the configuration of a wavelength division multiplexing and optical transmission apparatus according to a second embodiment of the present invention.
Fig. 7 is a block diagram showing the configuration of a wavelength division multiplexing and optical transmission apparatus according to a third embodiment of the present invention.
Fig. 8 is a block diagram showing the configuration of an important portion of a wavelength division multiplexing and optical transmission apparatus according to a fourth embodiment of the present invention.
Fig. 9 is a block diagram showing the configuration of an important portion of a wavelength division multiplexing and optical transmission apparatus according to a fifth embodiment of the present invention.

### BEST MODE FOR CARRYING OUT THE INVENTION

Hereinafter, the best mode for carrying out the present invention will now be described with reference to the accompanying drawings to explain the present invention in more detail.

### EMBODIMENT 1

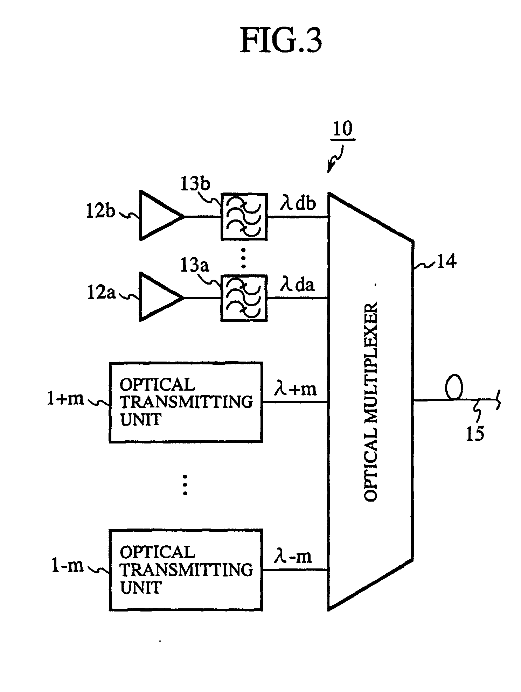

Fig. 3 is a block diagram showing the configuration of a wavelength division multiplexing and optical transmission apparatus according to a first embodiment of the present invention. In Fig. 3, 10 indicates a wavelength division multiplexing and optical transmission apparatus. 1-m to 1+m indicate a plurality of optical transmitting units for modulating each of a plurality of laser signals having wavelengths λ-m to λ+m different from each other with a data signal and outputting a plurality of modulated optical signals. The number of optical transmitting units 1-m to 1+m is 2m. 12a and 12b indicate optical amplifiers (or optical amplifying means). An input end terminal of each optical amplifier 12a or 12b is terminated at no reflection. 13a and 13b indicate two optical band pass filters (or band pass filtering means) for respectively outputting a spectrum slice optical signal. 14 indicates an optical multiplexer (or optical multiplexing means) for multiplexing the spectrum slice optical signals with the modulated optical signals. 15 indicates an optical fiber through which an optical output signal multiplexed in the optical multiplexer 14 is transmitted. Here, in this first embodiment, the optical band pass filter 13a corresponds to a high frequency optical band pass filter in which an output of the optical amplifier 12a is filtered and a non-modulated high frequency spectrum slice optical signal, namely, a non-modulated shorter wavelength spectrum slice optical signal is output, and the optical band pass filter 13b corresponds to a low frequency optical band pass filter in which an output of the optical amplifier 12b is filtered and a non-modulated low frequency spectrum slice optical signal, namely, anon-modulatedlongerwavelengthspectrumslice optical signal is output. However, it is applicable that each of the optical band pass filters 13a and 13b be formed of an optical band pass filter corresponding to a wavelength band (or frequency band) which is placed within a wavelength band occupied by the modulated optical signals output from the optical transmitting units 1-m to 1+m.

Next an operation will be described below.

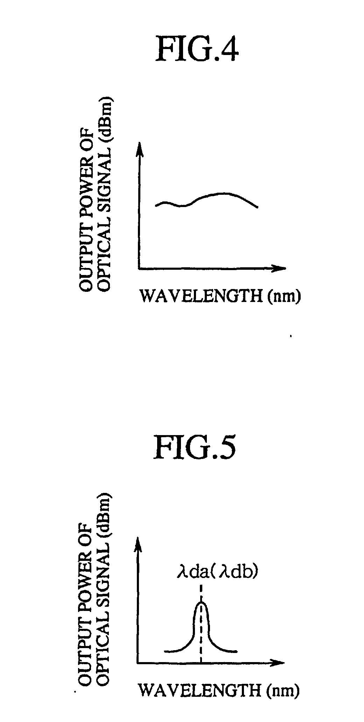

A plurality of laser signals having wavelengths λ-m to λ+m different from each other are modulated by using a plurality of data signals in the optical transmitting units 1-m to 1+m, of which the number is 2m, in one-to-one correspondence, and a plurality of modulated optical signals are output. Each of the modulated optical signals of the 2m wavelengths (the number 2m of wavelengths is normally equal to a value ranging from 4 to 16) output from the optical transmitting units 1-m to 1+m has a spectral line width. A plurality of divided wavelength bands are obtained by dividing the optical transmission wavelength band at equal intervals in a direction from the shorter wavelength side to the longer wavelength side, and a wavelength band of each modulated optical signal having the spectral line width is placedwithin the corresponding divided wavelength band. The modulated optical signals are arranged in a form of shifting the wavelength at constant wavelength intervals from the shorter wavelength side to the longer wavelength side. Each of the optical amplifiers 12a and 12b is formed of a non-input optical amplifier in which an input end is terminated at no reflection to cut off an input signal, and a broadband amplified spontaneous emission light signal called amplified spontaneous emission light (ASE) emitted from an erbium doped fiber, inwhich energy of a pumping laser signal source (not shown) is absorbed, is output from each of the optical amplifiers 12a and 12b. As shown in Fig. 4, this broadband amplified spontaneous emission light signal has a spectral distribution in which the gain is almost uniformly distributed over the entire wavelength band. Also, when the amplified spontaneous emission light signal is transmitted through each of the optical band pass filters 13a and 13b, as shown in Fig. 5, components of the amplified spontaneous emission light signal having wavelengths other than a specific wavelength are filtered off in each optical band pass filter 13a or 13b, and only a component of the amplified spontaneous emission light signal having the specific wavelength is transmitted through each optical band pass filter. In detail, the amplified spontaneous emission light signals having wavelengths, which are placed on the outside and are adjacent to the wavelength band occupied by themodulated optical signals output from the optical transmitting units 1-m to 1+m, are output from the optical band pass filters 13a and 13b. That is to say, a spectrum slice optical signal of a wavelength λda and a spectrum slice optical signal of a wavelength λdb are output from the optical band pass filters 13a and 13b. Here, the spectrum slice optical signal of the wavelength λda is adjacent to the shorter wavelength side of the modulated optical signal having the wavelength λ-m, and the spectrum slice optical signal of the wavelength λdb is adjacent to the longer wavelength side of the modulated optical signal having the wavelength λ+m. As is apparent from the production process of the spectrum slice optical signals, each spectrum slice optical signal is not modulated.

The spectrum slice optical signals output from the optical band pass filters 13a and 13b are multiplexed with the modulated optical signals output from the optical transmitting units 1-m to 1+m in the optical multiplexer 14 and are transmitted through the optical fiber 15. In this case, the spectrum slice optical signals placed on both sides of the wavelength band occupied by the modulated optical signals function so as to reduce a peak power of each modulated optical signal, and a gain distribution of the modulated optical signals in the optical transmission wavelength band of each optical amplifier repeater is flattened by the spectrum slice optical signals. In detail, gains of modulated optical signals placed on the shorter wavelength side among the modulated optical signals output from the optical transmitting units 1-m to 1+m are reduced by the spectrum slice optical signal of the wavelength λda output from the optical band pass filter 13a, and gains of modulated optical signals placed on the longer wavelength side among the modulated optical signals output from the optical transmitting units 1-m to 1+m are reduced by the spectrum slice optical signal of the wavelength λdb output from the optical band pass filter 13b. Therefore, output powers of the modulated optical signals output from the optical transmitting units 1-m to 1+m are reduced to such a degree that the modulated optical signals do not cause non-linear optical effects, and the transmission quality of the modulated optical signals is improved. Also, the spectrum slice optical signals of the wavelengths λda and λdb placed on both sides of the wavelength band occupied by the modulated optical signals compensate the gain differences caused in the optical amplifier repeaters. Therefore, an output power distribution of the modulated optical signals output from the optical transmitting units 1-m to 1+m is flattened in the transmission wavelength band of each optical amplifier repeater, and the transmission quality of the modulated optical signals is improved.

As is described above, in the first embodiment, the amplified spontaneous emission light signals are output by using the non-input optical amplifiers 12a and 12b, the amplified spontaneous emission light signals are filtered in the optical band pass filters 13a and 13b to obtain the spectrum slice optical signals, and the spectrum slice optical signals functioning as dummy optical signals are multiplexed with the modulated optical signals. Therefore, awavelength band occupied by the spectrum slice optical signals or band components of the spectrum slice optical signals can be arbitrarily processed. Also, because the spectrum slice optical signals differ from the conventional dummy optical signals which each are emitted from a laser diode functioning as a dummy optical signal source and have a single wavelength, there is no probability that the stimulated Brillouin scattering denoting one fiber non-linear phenomenon is caused due to a narrow spectral line width of the output optical signal so as to degrade the transmission quality, and there is no probability that a polarization scrambler is required to prevent the deterioration of an S/N ratio caused by the polarization dependent gain (PDG) of each optical amplifier repeater placed on the way along the transmission line. Accordingly, the enlarging of the size of the wavelength division multiplexing and optical transmission apparatus can be suppressed, and the cost of the production of the wavelength division multiplexing and optical transmission apparatus can be reduced. Also, in cases where a technical improvement is performed to widen the wavelength band occupied by the modulated optical signals for the purpose of increasing the number 2m of wavelengths of the modulated optical signals, the technical improvement can be performed by only changing the optical band pass filters 13a and 13b connected to the optical amplifiers 12a and 12b to those having required band pass filtering characteristics. Therefore, it is not required to newly prepare a dummy optical signal source possible to be accommodated to a new system, and the new system of the wavelength division multiplexing and optical transmission apparatus can be obtained without increasing the cost.

### EMBODIMENT 2

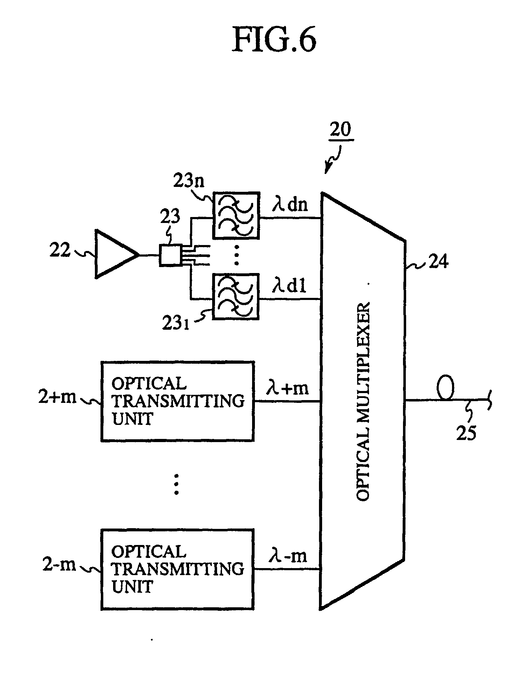

Fig. 6 is a block diagram showing the configuration of a wavelength division multiplexing and optical transmission apparatus according to a second embodiment of the present invention. In Fig. 6, 20 indicates a wavelength division multiplexing and optical transmission apparatus. 2-m to 2+m indicate a plurality of optical transmitting units for modulating a plurality of laser signals having wavelengths λ-m to λ+m different from each other with a data signal and outputting a plurality of modulated optical signals. 22 indicates an optical amplifier (or optical amplifying means). An input end of the optical amplifier 22 is terminated at no reflection to cut off an input signal. 23 indicates a light dividing element connected to an output end terminal of the optical amplifier 22. 23₁ to 23n indicate a plurality of optical band pass filters connected to a plurality of divided output terminals of the light dividing element 23 respectively. The number of divided output terminals of the light dividing element 23 is n. 24 indicates an optical multiplexer for multiplexing a plurality of spectrum slice optical signals output from the optical band pass filters 23₁ to 23n with the modulated optical signals output from the optical transmitting units 2-m to 2+m. 25 indicates an optical fiber through which an optical output signal multiplexed in the optical multiplexer 24 is transmitted. Here, in this second embodiment, a band pass filtering means comprises the light dividing element 23 and the optical band pass filters 23₁ to 23n (of which the number is n).

Next an operation will be described below.

A plurality of laser signals having wavelengths λ-m to λ+m different from each other are modulated by using a plurality of data signals in the optical transmitting units 2-m to 2+m, of which the number is 2m, in one-to-one correspondence, and a plurality of modulated optical signals are output. Each of the modulated optical signals of the 2m wavelengths (the number 2m of wavelengths is normally equal to a value ranging from 4 to 16) output from the optical transmitting units 2-m to 2+m has a spectral line width. A plurality of divided wavelength bands are obtained by dividing an optical transmission wavelength band at equal intervals in a direction from the shorter wavelength side to the longer wavelength side, and a wavelength band of each modulated optical signal having the spectral line width is placed within one corresponding divided wavelength band. The modulated optical signals are arranged in a formof shifting the wavelength at constant wavelength intervals from the shorter wavelength side to the longer wavelength side. Because the optical amplifier 22 is formed of a non-input optical amplifier in which an input signal is cut off, and a broadband amplified spontaneous emission light signal called the amplified spontaneous emission light (ASE) described before is output from the optical amplifier 22. The amplified spontaneous emission light signal is divided into a plurality of laser signals(of which the number is n) in the light dividing element 23. Also, when the branched laser signals are transmitted through the optical bandpass filters 23₁ to 23n respectively, components of each divided laser signal having wavelengths other than a specific wavelength are filtered off in the corresponding optical band pass filter, and a plurality of spectrum slice optical signals of specific wavelengths λd1 to λd2 are transmitted through the optical band pass filters 23₁ to 23n respectively. In detail, in cases where integral numbers i and j are set to arbitral numbers adjacent to each other in a series of integral numbers 1 to n, a plurality of spectrum slice optical signals of specific wavelengths λd1 to λdi adjacent to the shorter wavelength side of the wavelength band occupied by the modulated optical signals are output from the optical band pass filters 23₁ to 23i respectively, and a plurality of spectrum slice optical signals of specific wavelengths λdj to λdn adjacent to the longer wavelength side of the wavelength band occupied by the modulated optical signals are output from the optical band pass filters 23ⱼ to 23n respectively. In this case, it is applicable that each of the optical band pass filters 23₁ to 23n be formed of an optical band pass filter corresponding to a wavelength band which is placed within a wavelength band occupied by the modulated optical signals output from the optical transmitting units 2-m to 2+m.

The spectrum slice optical signals output from the optical band pass filters 23₁ to 23n are multiplexed with the modulated optical signals output from the optical transmitting units 2-m to 2+m in the optical multiplexer 24 and are transmitted through the optical fiber 25. In this case, the spectrum slice optical signals placed on both sides of the wavelength band occupied by the modulated optical signals function so as to reduce a peak power of each modulated optical signal. In detail, gains of modulated optical signals placed on the shorter wavelength side among the modulated optical signals output from the optical transmitting units 2-m to 2+m are reduced by the spectrum slice optical signals of the wavelengths λd1 to λdi output from the optical band pass filters 23₁ to 23i (of which the number is i), and gains of modulated optical signals placed on the longer wavelength side among the modulated optical signals output from the optical transmitting units 2-m to 2+m are reduced by the spectrum slice optical signals of the wavelengths λdj to λdn output from the optical band pass filters 23j to 23n (of which the number is n-i).

Therefore, output powers of the modulated optical signals output from the optical transmitting units 2-m to 2+m are reduced to such a degree that the modulated optical signals do not cause non-linear optical effects in the transmission wavelength band of each optical amplifier repeater, and the transmission quality of the modulated optical signals is improved. Also, the spectrum slice optical signals of the wavelengths λd1 to λdn placed on both sides of the wavelength band occupied by the modulated optical signals compensate the gain differences of the optical amplifier repeaters. In detail, the spectrum slice optical signals (of which the number is i) of the wavelengths λd1 to λdi output from the optical band pass filters 23₁ to 23i are multiplexed as a plurality of dummy optical signals with the modulated optical signals output from the optical transmitting units 2-m to 2+m, and a multiplexed optical signal is input to each optical amplifier repeater. Because the number of wavelengths of the multiplexed optical signal input to the optical amplifier repeater approaches the designed number of wavelengths, the same gain profile as that of the optical amplifier repeater can be maintained in the optical amplifier repeater, a gain distribution of the modulated optical signals output from the optical transmitting units 2-m to 2+m is flattened in the optical amplifier repeater, and the transmission quality of the modulated optical signals can be improved.

As is described above, in the second embodiment, the amplified spontaneous emission light signal is output by using the non-input optical amplifier 22, the divided laser signals (of which the number is n) obtained by dividing the amplified spontaneous emission light signal are filtered in the optical band pass filters 23₁ to 23n respectively to produce the spectrum slice optical signals, and the spectrum slice optical signals functioning as dummy optical signals are multiplexed with the modulated optical signals. Therefore, a wavelength band occupied by the spectrum slice optical signals or band components of the spectrum slice optical signals can be arbitrarily processed by using the band pass filtering means of a minimum size which is obtained by combining the single optical amplifier 22 and the optical band pass filters 23₁ to 23n. Therefore, because the spectrum slice optical signals differ from the conventional dummy optical signals which each are emitted from a laser diode functioning as a laser signal source and have a single wavelength, there is no probability that the stimulated Brillouin scattering denoting one fiber non-linear phenomenon is caused due to a narrow spectral line width of the output laser signal to degrade the transmission quality, and there is no probability that a polarization scrambler is required to prevent the deterioration of an S/N ratio caused by the polarization dependent gain (PDG) of each optical amplifier repeater placed on the way along the transmission line. Accordingly, the enlarging of the size of the wavelength division multiplexing and optical transmission apparatus can be suppressed, and the cost of the production of the wavelength divisionmultiplexing and optical transmission apparatus can be reduced. Also, in cases where a technical improvement is performed to widen the wavelength band occupied by the modulated optical signals for the purpose of increasing the number 2m of wavelengths of the modulated optical signals, the technical improvement can be performed by only changing the optical band pass filters 23₁ to 23m connected to the single optical amplifier 22 through the light dividing element 23 to those having required band pass filtering characteristics. Therefore, it is not required to newly prepare a dummy optical signal source possible to be accommodated to a new system, and the new system of the wavelength division multiplexing and optical transmission apparatus can be obtained without increasing the cost.

### EMBODIMENT 3

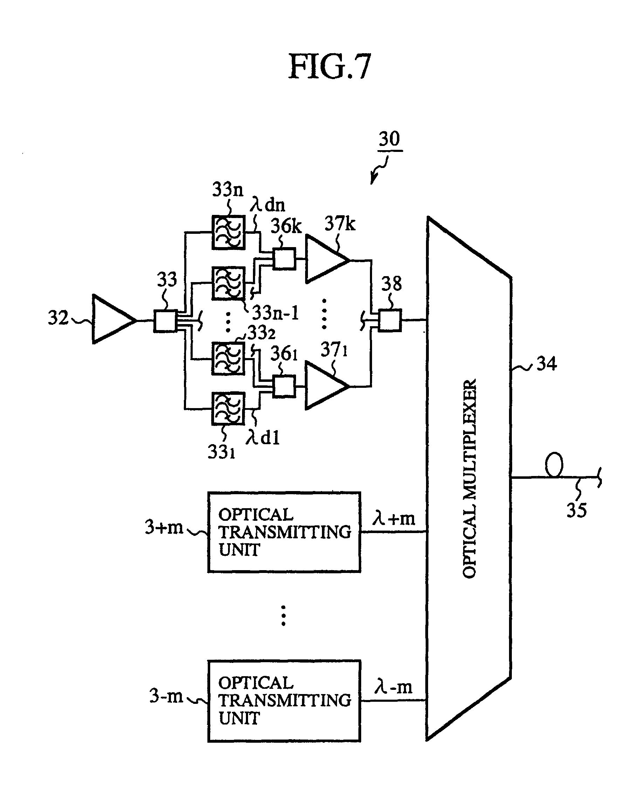

Fig. 7 is a block diagram showing the configuration of a wavelength division multiplexing and optical transmission apparatus according to a third embodiment of the present invention. In Fig. 7, 30 indicates a wavelength division multiplexing and optical transmission apparatus. 3-m to 3+m indicate a plurality of optical transmitting units for modulating a plurality of laser signals having wavelengths λ-m to λ+m different from each other with a data signal and outputting a plurality of modulated optical signals. 32 indicates an optical amplifier. An input end of the optical amplifier 32 is terminated at no reflection to cut off an input signal. 33 indicates a light dividing element connected to an output end terminal of the optical amplifier 32. 33₁ to 33n indicate apluralityof optical bandpass filters connected to a plurality of divided output terminals of the light dividing element 33 respectively. The number of divided output terminals of the light dividing element 33 is n. Output signals of the optical bandpass filters 33₁ to 33n are classified into k blocks. 36₁ to 36k indicate a plurality of optical multiplexers for respectively multiplexing the output signals of the optical band pass filters of the corresponding block with each other. 37₁ to 37k indicate a plurality of optical amplifiers connected to a plurality of output terminals of the optical multiplexers 36₁ to 36k respectively. 38 indicates an optical multiplexer for multiplexing the output signals of the optical band pass filters 33₁ to 33n with each other. 34 indicates an optical multiplexer for multiplexing a plurality of spectrum slice optical signals output from the optical multiplexer 38 with the modulated optical signals output from the optical transmitting units 3-m to 3+m. 35 indicates an optical fiber through which an optical output signal multiplexed in the optical multiplexer 34 is transmitted. Here, in this third embodiment, a band pass filtering means comprises the light dividing element 33, the optical band pass filters 33₁ to 33n, the optical multiplexers 36₁ to 36k, the optical amplifiers 37₁ to 37k and the optical multiplexer 38. However, the optical multiplexer 38 can be omitted. In this case, output signals of the optical amplifiers 37₁ to 37k are directly input to the optical multiplexer 34.

Next an operation will be described below.

A plurality of laser signals having wavelengths λ-m to λ+m different from each other is modulated by using a plurality of data signals in the optical transmitting units 3-m to 3+m, of which the number is 2m, in one-to-one correspondence, and a plurality of modulated optical signals are output. Each of the modulated optical signals of the 2m wavelengths (the number 2m of wavelengths is normally equal to a value ranging from 4 to 16) output from the optical transmitting units 3-m to 3+m has a spectral line width. A plurality of divided wavelength bands are obtained by dividing an optical transmission wavelength band at equal intervals in a direction from the shorter wavelength side to the longer wavelength side, and a wavelength band of each modulated optical signal having the spectral line width is placed within one corresponding divided wavelength band. The modulated optical signals are arranged in a form of shifting the wavelength at constant wavelength intervals from the shorter wavelength side to the longer wavelength side. Because the optical amplifier 32 is formed of a non-input optical amplifier, and a broadband amplified spontaneous emission light signal called the amplified spontaneous emission light (ASE) described before is output from the optical amplifier 32. The amplified spontaneous emission light signal output from the optical amplifier 32 is divided into a plurality of amplified spontaneous emission light signals (of which the number is n) in the light dividing element 33 of a next stage. Thereafter, the amplified spontaneous emission light signals are lead to the optical band pass filters 33₁ to 33n respectively. In the optical band pass filters 33₁ to 33n, components of each amplified spontaneous emission light signal having wavelengths other than a specific wavelength are filtered off, and the amplified spontaneous emission light signals having specific wavelengths λd1 to λd2 respectively are obtained. The filtered amplified spontaneous emission light signals (of which the number is n) are classified into k blocks, and each block of filtered amplified spontaneous emission light signals is supplied to the corresponding one of the optical multiplexers 36₁ to 36k. Here, the symbol k denotes an arbitrary number included in the integral numbers from 1 to n. The blocks of the amplified spontaneous emission light signals multiplexed in the optical multiplexers 36₁ to 36k are amplified in the optical amplifiers 37₁ to 37k respectively and are multiplexed with each other in the optical multiplexer 38. The amplified spontaneous emission light signals multiplexed with each other in the optical multiplexer 38 function as aplurality of spectrum slice optical signals having wavelengths λd1 to λdn adjacent to both sides of a wavelength band occupiedby the multiplexed optical signals output from the optical transmitting units 3-m to 3+m.

The first half blocks of spectrum slice optical signals among the k blocks of the spectrum slice optical signals of the wavelengths λd1 to λdn multiplexed with each other in the optical multiplexer 38 correspond to a group of wavelengths following the wavelength band occupied by the multiplexed optical signals on the shorter wavelength side, and the latter half blocks of spectrum slice optical signals among the k blocks of the spectrum slice optical signals correspond to a group of wavelengths following the wavelength band occupied by the multiplexed optical signals on the longer wavelength side. The spectrum slice optical signals output from the optical multiplexer 38 are multiplexed with the multiplexed optical signals output from the optical transmitting units 3-m to 3+m in the optical multiplexer 34, and a multiplexed optical signal is transmitted through the optical fiber 35. In this case, the spectrum slice optical signals placed on both sides of the wavelength band occupied by the modulated optical signals function so as to reduce a peak power of each modulated optical signal. In detail, gains of modulated optical signals placed on the shorter wavelength side among the modulated optical signals output from the optical transmitting units 3-m to 3+m are reduced by the first blocks of spectrum slice optical signals selected among the k blocks of the spectrum slice optical signals, and gains of modulated optical signals placed on the longer wavelength side among the modulated optical signals output from the optical transmittingunits 3-m to 3+m are reduced by the latter blocks of spectrum slice optical signals selected among the k blocks of the spectrum slice optical signals. Therefore, output powers of the modulated optical signals output from the optical transmitting units 3-m to 3+m are reduced to such a degree that the modulated optical signals do not cause non-linear optical effects in the transmission wavelength band of each optical amplifier repeater, and the transmission quality of the modulated optical signals is improved.

Also, the spectrum slice optical signals of the wavelengths λd1 to λdn compensate the gain differences of the optical amplifier repeaters. In detail, the spectrum slice optical signals (of which the number is i) of the wavelengths λd1 to λdi output from the optical band pass filters 33₁ to 33i are multiplexed as a plurality of dummy optical signals with the modulated optical signals output from the optical transmitting units 3-m to 3+m, and the multiplexed optical signal is input to each optical amplifier repeater. Because the number of wavelengths of the multiplexed optical signal input to the optical amplifier repeater approaches the designed number of wavelengths, the same gain profile as that of the optical amplifier repeater can be maintained in the optical amplifier repeater, a gain distribution of the modulated optical signals output from the optical transmitting units 3-m to 3+m is flattened in the optical amplifier repeater, and the transmission quality of the modulated optical signals can be improved.

Also, assuming that one of spectrum slice optical signal sources is put in an inoperative condition and no amplified spontaneous emission light signal of a wavelength λg is output from an optical amplifier 37h (h denotes an integral number ranging from 1 to k) installed for alasersignalofthewavelength λg, a plurality of amplified spontaneous emission light signals belonging to the same block as that of the lacked amplified spontaneous emission light signal of the wavelength λg are input to the optical amplifier 37h and are amplified at gains stronger than those in a case of no lack of the amplified spontaneous emission light signal of the wavelength λg. As a result, the gain emphasized amplified spontaneous emission light signals of wavelengths adjacent to the wavelength λg compensate for the lack of the amplified spontaneous emission light signal of the wavelength λg, and the transmission quality is not substantially adversely influenced by the lack of the amplified spontaneous emission light signal of the wavelength λg. In other words, the wavelength division multiplexing and optical transmission apparatus 30 can have the device configuration having a high redundancy to the lack of a specific wavelength.

As is described above, in the third embodiment, the broadband amplified spontaneous emission light signal is output by using the single optical amplifier 32 of which the input terminal is terminated at no reflection, the divided amplified spontaneous emission light signals (of which the number is n) obtained by dividing the amplified spontaneous emission light signal are filtered in the optical band pass filters 33₁ to 33n respectively to produce the spectrum slice optical signals, and the spectrum slice optical signals functioning as dummy optical signals are multiplexed with the modulated optical signals. Therefore, a wavelength band occupied by the spectrum slice optical signals or band components of the spectrum slice optical signals can be arbitrarily processed. Therefore, because the spectrum slice optical signals differ from the conventional dummy optical signals which each are emitted from a laser diode functioning as a dummy optical signal source and have a single wavelength, there is no probability that the stimulated Brillouin scattering denoting one fiber non-linear phenomenon is caused due to a narrow spectral line width of the output laser signal to degrade the transmission quality, and there is no probability that a polarization scrambler is required to prevent the deterioration of an S/N ratio caused by the polarization dependent gain (PDG) of each optical amplifier repeater placed on the way along the transmission line. Accordingly, the enlarging of the size of the wavelength division multiplexing and optical transmission apparatus can be suppressed, and the cost of the production of the wavelength division multiplexing and optical transmission apparatus can be reduced. Also, in cases where a technical improvement is performed to widen the wavelength band occupied by the modulated optical signals for the purpose of increasing the number 2m of wavelengths of the modulated optical signals, the technical improvement can be performed by only changing the optical band pass filters 33₁ to 33m connected to the single optical amplifier 32 through the light dividing element 33 to those having required band pass filtering characteristics. Therefore, it is not required to newly prepare a dummy optical signal source possible to be accommodated to a new system, and the new system of the wavelength division multiplexing and optical transmission apparatus can be obtained without increasing the cost. Also, even though one of spectrum slice optical signal sources is put in an inoperative condition so as to lack an amplified spontaneous emission light signal of a specific wavelength, the redundancy is exerted in one of the optical amplifiers 37₁ to 37k so as to emphasize gains of amplified spontaneous emission light signals of wavelengths adjacent to the specific wavelength of the lacked amplified spontaneous emission light signal. Therefore, the transmission quality is not adversely influenced by the lack of the amplified spontaneous emission light signal of the specific wavelength.

### EMBODIMENT 4

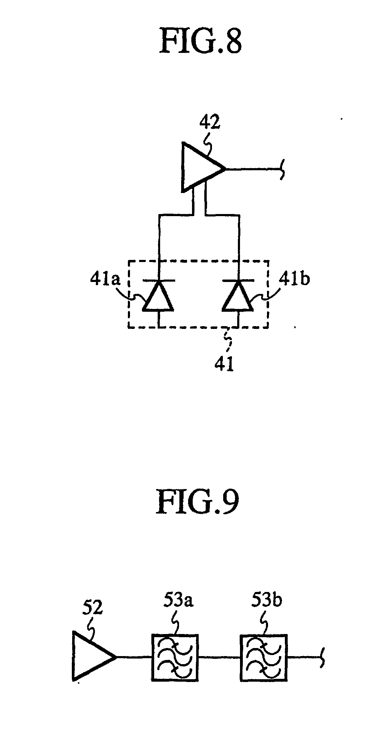

Fig. 8 is a block diagram showing the configuration of an important portion of a wavelength division multiplexing and optical transmission apparatus according to a fourth embodiment of the present invention. In Fig. 8, 41 indicates a pumping laser signal source device called a pump laser diode. 41a and 41b indicate a pair of laser diodes (or pumping laser signal sources) installed in the pumping laser signal source device 41 so as to give redundancy to the laser diodes 41a and 41b. 42 indicates an optical amplifier (or optical amplifying means). Next an operation will be described below.

In a normal operation, one of the laser diodes 41a and 41b installed in the pumping laser signal source device 41, for example, only the laser diode 41a is operated, and an excitation laser signal is supplied to the optical amplifier 42. However, when the laser diode 41a normally used is broken down and is put in an inoperative condition, the other laser diode 41b installed as a supplemental one is operated in place of the laser diode 41a. Therefore, even though the laser diode 41a is put in an inoperative condition, no adverse influence is exerted on the wavelength division multiplexing and optical transmission apparatus.

As is described above, in the fourth embodiment, even though the laser diode 41a is put in an inoperative condition, an excitation laser signal emitted from the supplemental laser diode 41b can be supplied to the optical amplifier 42. Therefore, the optical amplification can be stably continued in the optical amplifier 42, and the reliability for the optical amplifier 42 can be heightened. Here, the configuration of the optical amplifier 42 and the pumping laser signal source device 41 can be applied in place of each of the optical amplifiers 12a, 12b, 22 and 32 described in the first to third embodiments.

### EMBODIMENT 5

Fig. 9 is a block diagram showing the configuration of an important portion of a wavelength division multiplexing and optical transmission apparatus according to a fifth embodiment of the present invention. In Fig. 9, 52 indicates an optical amplifier (or optical amplifying means). 53a and 53b indicate two optical band pass filters (or band pass filtering means) connected in cascade to an output terminal of the optical amplifier 52.

Next an operation will be described below.

An amplified spontaneous emission light signal output from the optical amplifier 52 is filtered in each of the optical band pass filters 53a and 53b connected in cascade. Components of unnecessary wavelength bands included in the amplified spontaneous emission light signal, which is filtered in the optical band pass filter 53a of the first stage according to filtering characteristics of the optical band pass filters 53a, are removed in the optical band pass filter 53b of the latter stage with high precision, and a desired spectrum slice optical signal is obtained. Normally, because an attenuation form of the spectrum slice optical signal in a given wavelength band is specified, a prescribed attenuation form is strictly obtained in the spectrum slice optical signal by using the pair of optical band pass filters 53a and 53b connected in cascade, an S/N ratio of the spectrum slice optical signal can be improved.

As is described above, in the fifth embodiment, an attenuation form of the spectrum slice optical signal in a given wavelength band can be strictly specified, an isolation ratio of signals can be heightened, and the transmission quality can be heightened. Here, a technique of the configuration of the band pass filtering means comprising a plurality of optical band pass filters can be applied in each of the first to third embodiments.

### INDUSTRIAL APPLICABILITY

As is described above, the wavelength division multiplexing and optical transmission apparatus according to the present invention is appropriate for a large capacity of wavelength division multiplexing and optical transmission system in which a plurality of modulated optical signals can be transmitted without degrading a transmission quality of the modulated optical signals even though the number of wavelengths of the modulated optical signals installed in the early stage by using a non-input optical amplifier is small.

## Claims

1. A wavelength division multiplexing and optical transmission apparatus comprising:
a plurality of optical transmitting units for modulating a plurality of laser signals having inherent wavelengths with a plurality of data signals and outputting a plurality of modulated optical signals;
optical amplifying means for outputting an amplified spontaneous emission light signal;
band pass filtering means for setting both an occupied wavelength band of the modulated optical signals output by the optical transmitting units and a neighboring wavelength band of the occupied wavelength band as a filtering wavelength band and band-filtering the amplified spontaneous emission light signal output by the optical amplifying means and outputting a non-modulated spectrum slice optical signal; and
optical multiplexing means for multiplexing the non-modulated spectrum slice optical signal output by the band pass filtering means with the modulated optical signals output by the optical transmitting units and transmitting a multiplexed optical signal.

2. A wavelength division multiplexing and optical transmission apparatus according to claim 1, wherein the optical amplifying means comprises a pair of optical amplifiers which each have a signal input terminal terminated at no reflection, and the band pass filtering means comprises optical band pass filters for setting both the occupied wavelength band of the modulated optical signals output by the optical transmitting units and the neighboring wavelength band of the occupied wavelength band as the filtering wavelength band, filtering amplified spontaneous emission light signals output by the optical amplifiers and outputting non-modulated spectrum slice optical signals.

3. A wavelength division multiplexing and optical transmission apparatus according to claim 1, wherein the optical amplifying means comprises a single optical amplifier which has a signal input terminal terminated at no reflection, and the bandpass filteringmeans comprises
a light dividing element for dividing the amplified spontaneous emission light signal output by the optical amplifier into a plurality of amplified spontaneous emission light signals, and
a plurality of optical band pass filters, connected to a plurality of divided output terminals of the light dividing element respectively, for outputting the non-modulated spectrum slice optical signal.

4. A wavelength division multiplexing and optical transmission apparatus according to claim 1, wherein the optical amplifying means comprises a single optical amplifier which has a signal input terminal terminated at no reflection, and the band pass filtering means comprises
a light dividing element for dividing the amplified spontaneous emission light signal output by the optical amplifier into a plurality of amplified spontaneous emission light signals,
a plurality of optical band pass filters connected to a plurality of divided output terminals of the light dividing element respectively,
an optical multiplexer for multiplexing two or more outputs of the optical band pass filters with each other and outputting the non-modulated spectrum slice optical signal, and
an optical amplifier for amplifying an output of the optical multiplexer while controlling a power of the output to a constant value.

5. A wavelength division multiplexing and optical transmission apparatus according to claim 1, wherein the optical amplifying means comprises
an optical amplifier which has a signal input terminal terminated at no reflection, and
a plurality of pumping laser signal sources connected to the optical amplifier redundantly.

6. A wavelength division multiplexing and optical transmission apparatus according to claim 1, wherein the band pass filtering means comprises a plurality of optical bandpass filters connected in cascade.
